# FASCICULE DE BREVET EUROPEEN

(11) **EP 1 664 199 B1**
(45) Date de publication et mention de la délivrance du brevet: **23.08.2017**
(21) Numéro de dépôt: 04786389.9
(22) Date de dépôt: 24.08.2004
(51) Int. Cl.: C08L 95/00, C08L 23/08, C08L 23/16, C08L 25/10, C08L 53/02, C08L 55/02

(54) **FLUXANT, SOLUMERE ET COMPOSITION BITUMINEUSE EN CONTENANT, PREPARATION ET APPLICATIONS DE CES PRODUITS**
FLUSSMITTEL, STAMMLÖSUNG UND BITUMENZUSAMMENSETZUNG DAMIT SOWIE HERSTELLUNG UND ANWENDUNGEN DIESER PRODUKTE
FLUX, STOCK SOLUTION AND BITUMINOUS COMPOSITION CONTAINING SAME, AND PREPARATION AND APPLICATIONS OF SAID PRODUCTS

(30) Priorité: 25.08.2003 FR 0350451
(43) Date de publication de la demande: 07.06.2006
(73) Titulaire: TOTAL MARKETING SERVICES, 92800 Puteaux (FR)
(72) Inventeur: MARIOTTI, Sophie, F-78220 Viroflay (FR); VINCENT, Régis, F-69520 Grigny (FR); ALBOUY, Arnaud, Philadelphia, PA 19103 (US)
(74) Mandataire: Cabinet Plasseraud
(86) Numéro de dépôt international: PCT/FR2004/050391
(87) Numéro de publication internationale: WO 2005/021655

(56) Documents cités:
- EP-A- 0 174 795
- WO-A-02/053645
- FR-A1- 2 688 795

## Description

La présente invention est relative aux bitumes, utilisés comme liants routiers ou comme revêtements d'étanchéité, d'amortissement de vibrations, d'isolation thermique et/ou d'isolation phonique.

Plus précisément, l'invention concerne des compositions bitumineuses se présentant sous forme de liants fluxés ou d'émulsions. Ces compositions bitumineuses comportent généralement, d'une part, un liant bitumineux, à savoir par exemple une suspension colloïdale de molécules d'asphaltènes dans une phase huileuse, et d'autre part, soit un solvant organique, soit une phase aqueuse associée à des tensioactifs ou savons.

Il est possible d'améliorer les propriétés mécaniques des bitumes en les mélangeant avec un ou plusieurs polymères (polyoléfines, Styrène-Butadiène, Styrène-Butadiène-Styrène, etc.), et éventuellement en les réticulant chimiquement ou non in situ.

L'invention a plus spécialement trait aux compositions bitumineuses constituées par des liants mélangés avec des fluxants, tels que des huiles d'origine pétrolière fluides. Les fluxants permettent d'abaisser significativement la viscosité des bitumes.

L'invention vise ainsi tout d'abord un nouveau fluxant de même que les produits incorporant ce nouveau fluxant comme ingrédient, à savoir :
- les liants bitumineux fluxés modifiés ou non avec un ou plusieurs polymères réticulés ou non in situ,
- les solutions à base de polymères susceptibles d'être utilisées pour la préparation de bitumes polymères et comprenant le nouveau fluxant, ces solutions étant appelées solutions mères concentrées, et pouvant le cas échéant renfermer ou non un agent de réticulation chimique.
- ainsi que les émulsions à base de liants bitumineux fluxés, modifiés ou non avec un ou plusieurs polymères et/ou à base de solutions mères.

L'invention inclut également :
- les procédés de préparation desdites compositions : liants bitumineux comprenant ces fluxants, solutions mères concentrées en polymère fluxées,
- de même que les applications desdites compositions bitumineuses à titre de matériau de construction, de revêtement routier (liants) ou comme matériau d'isolation, d'amortissement et/ou d'étanchéité.

Parmi les liants, on peut notamment distinguer les bitumes purs, les bitumes fluidifiés, les bitumes fluxés, les bitumes oxydés, les bitumes polymères ainsi que les émulsions de ces liants.

Les bitumes purs et les bitumes polymères sont généralement employés pour la construction et l'entretien des chaussées, mais ils peuvent être également utilisés dans les travaux hydrauliques (revêtement de canaux et de barrages, digues à la mer) ainsi que pour divers autres usages dans l'industrie.

Les bitumes fluxés sont des compositions de bitume(s) obtenues à partir de bitumes purs dont on a abaissé la viscosité par addition de solvants volatils. Ces bitumes fluxés autorisent des températures d'emploi nettement plus basses que les bitumes purs (par exemple 50°C versus 180°C). Les catégories les plus visqueuses de bitumes fluxés sont généralement réservées aux enduits superficiels, tandis que les plus fluides sont généralement utilisées pour l'imprégnation, la stabilisation des sols, pour la fabrication des émulsions et la préparation des enrobés à froid stockables.

Les bitumes fluidifiés sont obtenus par mélange de liants bitumineux avec des huiles carbochimiques ou pétrolières. Les bitumes fluxés diffèrent des bitumes fluidifiés, en particulier par la courbe de distillation de leurs fluxants, plus étendue vers le haut essentiellement.

Les émulsions de bitume sont une autre forme d'application des bitumes permettant d'accéder à des formes liquides fluides manipulables à froid (c'est-à-dire par exemple à une température de l'ordre de 50°C). Ces émulsions sont obtenues en dispersant le bitume en globules de quelques microns de diamètre, dans une phase aqueuse additionnée d'émulsifiants. Les émulsions comprennent les émulsions anioniques (les premières connues) mais surtout les émulsions cationiques qui représentent actuellement la majorité des fabrications. Dans chacune de ces catégories, les émulsions se distinguent par la teneur en liant bitumineux, la vitesse de rupture et la viscosité.

Selon la terminologie adoptée dans le cadre du présent exposé, les liants bitumineux fluidifiés et les liants bitumineux fluxés sont regroupés dans une seule et même catégorie, les termes "fluxés" et "fluidifiés" étant ainsi considérés comme synonymes.

Traditionnellement, les bitumes fluxés sont obtenus par mélange, par exemple à 150°C, d'une part, de liant bitumineux, et d'autre part, de fluxant. De manière générale, on connaît les fluxants d'origine pétrolière et les fluxants végétaux.

Classiquement, le fluxant que l'on peut assimiler à un solvant, comprend une fraction lourde et une fraction légère. A cet effet, on pourra se reporter par exemple à la référence JP1152159 concernant un enrobé formulé à base entre autre de bitumes fluxés par des liquides hydrocarbonés variés tels que huiles lourdes, huiles légères, kérosène, essence, huiles moteur ou huiles végétales.

La demande FR 2 688 795 A décrit des compositions bitumineuses comprenant un copolymère séquencé linéaire de styrène et de diène conjugué. Ces compositions bitumineuses peuvent comprendre un agent fluxant, qui peut être une huile hydrocarbonée présentant un intervalle de distillation compris entre 100°C et 600°C. En particulier, cette demande décrit une composition bitumineuse comprenant comme agent fluxant une huile hydrocarbonée ayant un intervalle de distillation compris entre 176°C et 352°C.

Le brevet européen EP-B-0 174 795 décrit des compositions de bitume/copolymères styrène-butadiène et leur procédé de préparation. Ces compositions comprennent, par exemple, 76 % parties en poids d'un bitume d'indice de pénétration 40/50 et 24 parties en poids d'une huile de fluxage aromatique dont la courbe de distillation est comprise entre 320 et 580° C, 4 parties en poids de copolymères butadiène-styrène, 0,04 parties en poids de soufre et 12 parties en poids de solvant aromatique ou aliphatique léger dont la courbe de distillation est comprise entre 220 et 300 C.

La demande PCT WO-A-02/053645 décrit un additif pour liant bitumineux composé de 2 à 6 % d'un fluxant, de 20 à 70 % d'un lubrifiant oléfinique raffiné et de 4 à 10 % d'un solvant. Selon cette demande PCT, le fluxant comprend par exemple un polyisobutylène de haute viscosité, un dispersant constitué par du soufre pulvérulent, un composé hydrocarboné oléfinique de lubrification et un solvant constitué par un composé hydrocarboné distillé léger.

La société TOTAL a développé également d'autres produits utilisables comme fluxants. Il s'agit par exemple, de fluxants dits de première génération appartenant à la famille de distillats de pétrole. Ces fluxants contiennent plus de 70 % de composés aromatiques. Une seconde génération de fluxants contenant des hydrocarbures saturés a été mise au point. Ces produits sont de préférence à base d'un distillat de pétrole appartenant à une coupe kérosène.

Bien que toutes ces générations de fluxants présentent de bonnes performances, la Demanderesse s'est attachée à développer de nouveaux types de fluxants présentant des propriétés améliorées se traduisant notamment par une manipulation plus facile des compositions les contenant, des propriétés en terme d'application améliorées ainsi qu'un potentiel élevé pour des utilisations variées.

En d'autres termes, ces nouveaux types de fluxants se doivent de permettre l'obtention des liants bitumineux fluxés d'utilisation plus aisée, c'est-à-dire ayant subi un abaissement significatif de leur viscosité, stables au stockage, de toxicité réduite, et présentant de bonnes performances techniques en cohésion et adhésion.

Il apparaît donc que l'art antérieur, bien que prenant en compte les réglementations actuelles relatives à l'étiquetage ne propose pas de compromis totalement satisfaisant au regard de la fourniture d'un fluxant pour composition bitumineuse, répondant pleinement à tout ou partie des spécifications énoncées ci-après.
a) Aptitude à la fluidification de bitume pétrolier de toute origine.
b) Toxicité réduite se traduisant notamment par une classification des fluxants, selon la réglementation CE, où ne figurent pas les phrases de risques R40 et R45.
c) Compatibilité du fluxant avec d'éventuels polymères pour bitume y compris éventuellement des réticulants chimiques.
d) Aptitude à former des solutions concentrées en polymères stables renfermant éventuellement des réticulants chimiques.
e) Possibilité de transformer aisément en émulsion stable des bitumes fluxés ou bitume/polymère fluxés par ajout d'eau et de tensioactifs.
f) Facilité d'emploi des compositions bitumineuses fluxées : e.g. revêtements routiers.
g) Contribution à l'obtention d'un bitume présentant toutes les propriétés requises en termes d'application au jeune âge et à moyen et long terme : adhésivité, cohésivité, résistance mécanique et stabilité.

Dans cet état de faits, l'un des objectifs essentiels de la présente invention est de proposer un nouveau fluxant pétrolier permettant de satisfaire à au moins l'une des spécifications a) à g) du cahier des charges susvisé.

Un autre objectif essentiel de l'invention est de proposer un fluxant pétrolier :
➢ efficace quant à l'abaissement de viscosité,
➢ de toxicité réduite (non étiqueté R40 ou R45),
➢ compatible avec les polymères notamment élastomères pour bitume, de manière à pouvoir former des solutions mères concentrées en polymères stables,
➢ utilisable dans les conditions habituelles de mise en oeuvre,
➢ peu ou pas sujet à des phénomènes de cristallisation à basse température,
➢ et présentant de bonnes performances techniques : cohésion, adhésion, durabilité dans le temps des revêtements.

Un autre objectif essentiel de l'invention est de fournir une composition bitumineuse (émulsion ou liant hydrocarboné anhydre) comprenant le fluxant satisfaisant à au moins une des spécifications a) à g) susvisées, ladite composition étant stable, de préparation et d'utilisation aisées, de toxicité réduite, et performante en termes de propriétés mécaniques finales pour les revêtements obtenus à partir de ladite composition.

Un autre objectif essentiel de l'invention est de fournir un procédé de préparation de la solution mère à base de fluxant et comprenant une concentration élevée en polymère(s) susvisée(s).

Un autre objectif essentiel de l'invention est de fournir un procédé de préparation de la composition bitumineuse sous forme de liant hydrocarboné anhydre et comprenant le fluxant tel que défini ci-dessus.

Un autre objectif essentiel de l'invention est de proposer l'application d'un fluxant pétrolier répondant à l'une au moins des spécifications a) à g) mentionnées ci-dessus, à titre d'ingrédient dans une composition bitumineuse sous forme de liant hydrocarboné anhydre, d'émulsion, ou dans une solution concentrée fluxant/ polymère utile pour la préparation d'une telle composition bitumineuse.

Un autre objectif essentiel de l'invention est de proposer l'application de compositions bitumineuses fluxées à l'aide d'un fluxant tel que défini dans les objectifs ci-dessus, ladite composition bitumineuse étant destinée à la fabrication de revêtements routiers ou éventuellement de matériaux d'isolation phonique et/ou d'étanchéité et/ou d'amortissement de vibrations.

Ces objectifs, parmi d'autres, sont atteints par la présente invention qui concerne tout d'abord un fluxant caractérisé en ce qu'il comprend :
- au moins une coupe pétrolière lourde **A** :
   ➢ dont la teneur en composés aromatiques TCA (en % en poids) est telle que : TCA ≤ 5,0, de préférence TCA ≤ 1,0, et plus préférentiellement encore TCA ≤ 0,1
   ➢ dont la courbe de distillation CD (en °C) est telle que : 200 ≤ CD ≤ 400, de préférence 230 ≤ CD ≤ 350 et plus préférentiellement encore 250 ≤ CD ≤ 330.
- et au moins une coupe pétrolière aromatique légère **B** essentiellement constituée de composés aromatiques dont le nombre d'atomes de carbone est inférieur ou égal à 20, de préférence à 15, et plus préférentiellement encore à 10.

Il est donc du mérite des inventeurs d'avoir sélectionné parmi les innombrables espèces de coupes pétrolières susceptibles d'être utilisées comme fluxants, une famille **A** particulière et parfaitement délimitée de coupes pétrolières dont la teneur en composés aromatiques TCA est inférieure ou égale à 5 % en poids et dont la courbe de distillation CD est comprise entre 200 et 400°C, et une famille **B** particulière et parfaitement délimitée de coupe pétrolière aromatique légère.

La combinaison de ces 2 familles **A** et **B** dans le fluxant permet d'optimiser au mieux les performances. Cette sélection a permis notamment d'isoler des fluxants efficaces, non étiquetés R40 ou R45 selon la réglementation CE et répondant parfaitement aux exigences de compatibilité avec les polymères pour bitumes et de compatibilité incidente bitumes/additifs polymères.

Dans le cadre de l'invention, le fluxant peut être uniquement constitué de la coupe **A**.

La coupe **A** du fluxant selon l'invention a par ailleurs l'avantage d'être facilement accessible et de permettre des abaissements de viscosité de bitume tout à fait significatifs.

Il doit également être noté que le fluxant selon l'invention donne accès à des solutions mères fluxant / polymère(s) pour bitumes stables, compatibles et permettant de disposer d'un précurseur facile à stocker et à manipuler pour la préparation de compositions bitumineuses.

Un tel fluxant non étiqueté R40 ou R45 correspond parfaitement aux attentes du marché en matière d'auxiliaire d'abaissement de la viscosité des bitumes.

Par ailleurs, il est également à noter que le fluxant selon l'invention de composition **A/B** permet d'obtenir des compositions bitumineuses comprenant ou non du polymère et obtenu ou non à l'aide d'une solution concentrée fluxant / polymère, qui présente une très bonne adhésivité avec les granulats auxquels elle est destinée à être mélangée pour les applications revêtements routiers.

Sur une caractéristique remarquable de l'invention, le rapport massique **A/B** est tel que : 50/50 < **A/B** ≤ 99/1, de préférence 70/30 ≤ **A/B** ≤ 90/10.

Pour satisfaire aux normes de sécurité et pour permettre aux produits finis bitumineux de répondre également à ces normes, il est particulièrement avantageux que le fluxant selon l'invention ait un point éclair PC_{F} (en °C) tel que : PC_{F} ≥ 55, de préférence PC_{F} ≥ 65 et plus préférentiellement encore PC_{F} ≥ 70.

Conformément à l'invention :
- la TCA est déterminée selon un test défini par la norme NF M 07024 ;
- la courbe de distillation CD est définie par mise en oeuvre d'un protocole opératoire tel que défini dans la norme NF M 07002 ;
- le point éclair est défini selon la norme Pensky Martens NF M 07019;
- la teneur en soufre [S] est définie selon la norme NF M 07052;
- la viscosité cinématique V est définie selon la norme NF T 60100;
- la teneur en normal paraffine [nP] est déterminée par chromatographie en phase gazeuse;
- et la masse volumique MV est définie selon la norme NF T 60172.

Pour optimiser les performances du fluxant selon l'invention, il est avantageux de choisir la coupe pétrolière lourde **A** de telle manière qu'elle présente au moins l'une des caractéristiques suivantes :
**.a.**) teneur en soufre [S] (en ppm) telle que : [S] ≤ 50, de préférence [S] ≤ 20, et plus préférentiellement encore [S] ≤ 5;
**.b.)** point éclair PC_{A} (en °C) tel que : PC_{A} ≥ 90, de préférence PC_{A} ≥ 100, et plus préférentiellement encore PC_{A} ≥ 110;
**.c.)** teneur en normal-paraffines [nP] (% en poids) telle que : [nP] ≤ 15, de préférence [nP] ≤ 12, et plus préférentiellement encore [nP] ≤ 10;
**.d.)** masse volumique MV (en kg/m³ à 15°C) telle que : 805 ≤ MV ≤ 830, de préférence 810 ≤ MV ≤ 825.

Ces caractéristiques **.a.)** à **.d.)** sont importantes pour l'obtention des propriétés avantageuses de la base ou de la coupe pétrolière lourde **A**, notamment en termes de performances techniques des bitumes et en termes d'absence de classification relative à la cancérogénicité.

Le point éclair PCA joue un rôle majeur dans l'élaboration d'un fluxant qui ne soit pas trop volatile et donc pas trop inflammable.

La limitation sur la teneur en normal-paraffines [NP] est une caractéristique préférentielle originale de la coupe pétrolière lourde **A**. En particulier, elle prévient contre toute tendance exagérée du fluxant à la cristallisation. Cela permet donc à la composition bitumineuse formulée avec ledit fluxant de présenter ainsi des performances techniques à froid améliorées.

Une autre caractéristique remarquable de la coupe pétrolière lourde **A**, tient à ce qu'elle est constituée préférentiellement par une coupe gazole de distillation pétrolière soumise à au moins un traitement d'hydrocraquage, de préférence précédé d'au moins une déazotation et/ou d'au moins une désulfuration, et, plus préférentiellement encore suivi d'au moins une distillation et/ou d'au moins un hydrotraitement.

Cette coupe pétrolière lourde ou base **A** est donc assimilable à un solvant hydrocraqué et/ou hydrotraité selon des procédures conventionnelles pour l'homme de l'art du raffinage pétrolier.

Avantageusement, cette coupe pétrolière lourde **A** comprend entre 40 et 70 % en poids de paraffines, de préférence 50 à 60 % en poids ainsi que 30 à 60 % en poids de naphtènes, de préférence 40 à 50 %.

Concernant la coupe pétrolière aromatique légère **B,** il s'agit d'une base aromatique permettant d'améliorer la compatibilité entre le bitume et les éventuels additifs polymères ajoutés à ce bitume, ainsi que le pouvoir fluxant. Dans ce contexte, elle contribue efficacement à la compatibilité entre la coupe pétrolière lourde **A** majoritaire et tout additif polymère pour bitume.

Selon une caractéristique préférée de l'invention, la coupe **B** comporte plus de 90 % en poids, de préférence plus de 95 % en poids, et plus préférentiellement encore plus de 99 % en poids de composés aromatiques. En pratique, il s'agit par exemple de composés aromatiques comportant 9 atomes de carbone.

Il peut être également intéressant de noter que la coupe pétrolière légère **B** possède de préférence un point d'ébullition (5%-95%) selon la norme NFT 07-002, compris entre 150 et 200°C, de préférence entre 155 et 180°C.

Les composants **A** et **B** sont intéressants en ce qu'ils sont disponibles et relativement économiques au sein de la chaîne des produits de la distillation pétrolière.

Leur compatibilité et leur innocuité en font des additifs fluxants de choix pour les bitumes de même origine pétrolière.

Selon un autre de ses aspects, l'invention concerne une composition bitumineuse contenant comme fluxant un mélange comprenant :
- au moins une coupe pétrolière lourde **A** :
   ➢ dont la teneur en composés aromatiques TCA (en % en poids) est telle que : TCA ≤ 5,0, de préférence TCA ≤ 1,0, et plus préférentiellement encore TCA ≤ 0,1
   ➢ dont la courbe de distillation CD (en °C) est telle que : 200 ≤ CD ≤ 400, de préférence 230 ≤ CD ≤ 350 et plus préférentiellement encore 250 ≤ CD ≤ 330
- et au moins une coupe pétrolière aromatique légère **B** essentiellement constituée de composés aromatiques dont le nombre d'atomes de carbone est inférieur ou égal à 20, de préférence à 15, et plus préférentiellement encore à 10.

Le mélange **A/B** dont il est question dans le cadre de cette utilisation, est décrit supra et infra dans le présent exposé.

L'un des intérêts majeurs du fluxant selon l'invention est lié au fait qu'il peut être utilisé pour la préparation de solution concentrée en polymère(s), c'est-à-dire de solution concentrée à base de polymères pour bitumes et de fluxant. Ces solutions concentrées en polymères sont des précurseurs facilement stockables offrant à l'utilisateur final, la possibilité de réaliser au dernier moment et selon la demande, la production de compositions bitume-polymères.

De telles solutions concentrées en polymère peuvent contenir en outre, éventuellement, un réticulant chimique, seul ou en combinaison, incluant un ou des réactif(s) connu(s) de l'homme de l'art parmi lesquels on trouve notamment le soufre, des donneurs de soufre, des acides minéraux ou organiques fonctionnalisés, des peroxydes.

Ainsi, l'invention concerne une solution mère utile pour la préparation de compositions bitumineuses caractérisée en ce qu'elle comprend :
- au moins un fluxant tel que défini ci-dessus ou du fluxant issu de l'utilisation telle que définie ci-dessus,
- au moins un polymère pour composition bitumineuse.

A titre d'exemples de polymères pour bitume, on peut citer les élastomères tels que les copolymères SB, SBS, SIS, SBS*, SBR, EPDM, polychloroprène, polynorbomène et éventuellement les polyoléfines tels que les polyéthylènes PE, PEHD, le polypropylène PP, les plastomères tels que les EVA, EMA, les copolymères d'oléfines et d'esters carboxyliques insaturés EBA, les copolymères polyoléfines élastomères, les polyoléfines du type polybutène, les copolymères de l'éthylène et d'esters de l'acide acrylique, méthacrylique ou de l'anhydride maléique, les copolymères et terpolymères d'éthylène et de méthacrylate de glycydile les copolymères éthylène-propylène, les caoutchoucs, les polyisobutylènes, les SEBS, les ABS.

Signification des abréviations :
- SB :: copolymère à blocs du styrène et du butadiène
- SBS :: copolymère à blocs styrène- butadiène-styrène
- SBS* :: copolymère à blocs styrène- butadiène-styrène en étoile
- PP :: polypropylène
- EVA :: copolymère polyéthylène-acétate de vinyle
- EBA :: copolymère polyéthylène-acrylate de butyle
- PE :: polyéthylène
- EPDM :: éthylène propylène diène modifié
- SIS :: styrène-isoprène-styrène
- EMA :: copolymère polyéthylène-acrylate de méthyle
- SEBS :: copolymère du styrène, de l'éthylène, du butylène et du styrène
- ABS :: acrylonitrile-butadiène-styrène
- PEHD :: polyéthylène haute densité
- SBR :: styrène-b-butadiène-rubber

De manière relativement classique, les proportions fluxants/polymères sont les suivantes : 0-90 / 100-10, de préférence 60-90 / 20-5.

Un autre objet de l'invention est constitué par les compositions bitumineuses formées par des liants hydrocarbonés anhydres et comprenant :
**1.** au moins un bitume,
**2.** au moins un fluxant tel que défini ci-dessus ou du fluxant issu de l'utilisation telle que définie ci-dessus,
**3.** éventuellement au moins un polymère réticulé ou non,
**4.** et éventuellement au moins un agent de réticulation

A titre d'exemples de compositions bitumineuses sous forme de liants hydrocarbonés anhydres **1** + **2** + **3** + **4,** on peut citer celles caractérisées par les proportions suivantes : 50 à 95 % en poids de **1,** 2 à 50% en poids de **2,** 0 à 10% en poids de **3,** 0 à 5% en poids de 4.

Comme cela a déjà été précisé, le fluxant selon l'invention n'est pas seulement approprié pour fluxer des liants hydrocarbonés anhydres, mais peut également entrer dans la composition d'émulsions bitumineuses.

Ainsi, l'invention vise également les compositions bitumineuses caractérisées en ce qu'elles sont constituées par une émulsion comprenant
**1'/** au moins un bitume,
**2'/** au moins un fluxant tel que défini ci-dessus ou du fluxant issu de l'utilisation telle que définie ci-dessus,
**3'/** éventuellement au moins un polymère,
**4'/** au moins un tensioactif,
**5'/** et de l'eau.

Le polymère **3'**/ répond à la même définition que le polymère **3** présenté ci-dessus.

Pour donner une illustration quantitative de ces formulations d'émulsions selon l'invention, on se référera par exemple à la composition suivante : 50 à 80 % en poids de **1'**, 2 à 20 % en poids de **2'**, 0 à 10 % en poids de **3'**, 0,01 à 2 % en poids du tensioactif **4'**, 20 à 50 % en poids d'eau.

S'agissant des tensioactifs, il s'agit des savons classiquement employés dans les émulsions bitumineuses.

Les émulsions de bitume ainsi fluxées conformément à l'invention sont des compositions facilement applicables à froid, par exemple à 50°C dans le domaine des revêtements routiers ou éventuellement dans le domaine des matériaux d'isolation et d'étanchéité.

A propos des applications routières des bitumes, il est à noter que tout enrobé bitumineux comprenant une composition bitumineuse telle que définie ci avant, ainsi que des granulats, constitue un autre objet de la présente invention. Ces enrobés bitumineux sont stables au stockage et peuvent être utilisés à chaud ou à froid.

Les granulats utilisés pour la fabrication d'enrobés à l'aide des compositions bitumineuses comprenant le fluxant selon l'invention peuvent être de tous types connus et appropriés.

Outre les applications routières, les compositions bitumineuses selon l'invention, à base de liants hydrocarbonés anhydres et/ou d'émulsions, peuvent faire l'objet d'utilisation dans le domaines des enduits superficiels et dans le domaine varié des applications industriels (matériaux d'isolation phonique et/ou d'étanchéité et/ou d'amortissement de vibrations, etc.).

L'invention sera mieux comprise et ses avantages apparaîtront bien à la lecture des exemples qui suivent.

### EXEMPLES :

L'invention est illustrée par les exemples suivants donnés à titre non limitatif. Les caractéristiques rhéologiques et mécaniques des bitumes ou des compositions bitume-polymère, bitume-fluxant, bitume-polymère-fluxant et fluxant-polymère auxquelles on fait référence dans ces exemples sont les suivantes :
- Pénétrabilité : exprimée en 1/10 mm suivant la norme NF EN 1426.
- Point de ramollissement : exprimé en °C suivant la norme NF EN 1427.
- Point de fragilité Fraass : exprimé en °C suivant la norme NF EN 12593.
- Caractéristiques rhéologiques par traction : mesurées suivant la norme T 66-038.
   ∘ Contrainte au seuil en MPa.
   ∘ Allongement au seuil en %.
   ∘ Contrainte à l'élongation maximale en MPa.
   ∘ Allongement à l'élongation maximale en %.
- Pseudo-viscosité : exprimée en secondes suivant la norme NF T 66-005.
- Viscosité dynamique exprimée en Pas au taux de cisaillement de 10s⁻¹
- Adhésivité (essai Vialit) : exprimée en % suivant la norme NF P 98-274 1.
- Cohésivité : exprimée en J.cm² et mesurée suivant la norme NF T 66-037.
- Caractérisation de l'évaporation : exprimée en % en poids suivant la norme NF T 66-031.
- Stabilisation 14 jours à 50°C : il s'agit d'une méthode d'obtention d'un liant. Elle est réalisée suivant la norme NF T 66-031.
- Stabilité au stockage : elle est évaluée suivant la norme NF EN 12847.

Les produits mis en oeuvre dans ces exemples sont :
- **fluxant B :** coupe pétrolière essentiellement constituée de composés aromatiques dont le nombre d'atomes de carbone est inférieur ou égal à 10. TOTAL FLUIDES commercialise une telle coupe.
- **fluxant A1** : coupe pétrolière hydrocraquée et hydrotraitée commercialisée par TOTAL FLUIDES
- **fluxant A2 :** coupe pétrolière hydrotraitée commercialisée par ExxonMobil Chemicals.

Les caractéristiques principales de ces trois composants sont reprises dans le tableau ci-dessous.

| | Fluxant **B** | Fluxant **A1** | Fluxant **A2** |
|---|---|---|---|
| TCA (%poids) | >95 | < 0,01 | 0,6 |
| [S] (ppm) | / | < 1 | <5 |
| V (mm²/s à 40°C) | / | 3,6 | 3,4 |
| PC_{A} (°C) | / | >100 | >100 |
| NP (%poids) | / | <10 | <25 |

### Exemple 1: Préparation d'une composition bitume-fluxant par incorporation directe du fluxant dans le bitume.

Ce premier exemple concerne une composition bitume-fluxant selon l'invention. Le fluxant utilisé est un mélange de 20 % de fluxant **B** et de 80 % de fluxant **A1.**

Cette préparation est réalisée à 175°C, dans un réacteur sous agitation. 89,8 % en masse d'un bitume pur de pénétrabilité 76 1/10 mm et de point de ramollissement 45°C, sont introduits dans le réacteur. Ensuite, nous ajoutons 9,8 % en poids de fluxant. Le mélange est agité pendant environ 1 heure. Enfin, nous introduisons 0,3 % en poids d'une polyamine grasse, qui joue le rôle de dope d'adhésivité dans la masse.

Le mélange obtenu a un aspect homogène et présente une pseudo-viscosité STV à 40°C, diamètre 10 mm de 167 secondes.

### Exemple 2 : Préparation d'une composition bitume-polymère fluxée par voie solution concentrée en polymère (ou solution mère).

Cet exemple concerne une composition de bitume-polymère fluxé, obtenue par voie solution concentrée en polymère. Cette composition est réalisée en deux étapes. La première consiste en la fabrication de la solution concentrée en polymère et comprend :
- 84,24 % en poids de fluxant constitué de 25 % de fluxant B et 75 % de fluxant **A1,**
- 15,16 % en poids d'un copolymère styrène-butadiène linéaire de masse moléculaire moyenne en nombre comprise entre 180 000 et 300 000 g.mol⁻¹ et dont la teneur en styrène est 15 % en masse,
- et 0,6 % de soufre.

La préparation du mélange est réalisée à 90-100°C dans un réacteur par incorporation du fluxant, du polymère sous agitation pendant environ deux heures. Ensuite, le soufre est introduit. Le mélange est agité pour obtenir l'homogénéité. La solution concentrée en polymère ainsi préparée est homogène et présente une pseudo-viscosité STV à 50°C, diamètre 4 mm de 360 secondes.

La seconde étape consiste à diluer 11,87 % de la solution concentrée en polymère avec 88,13 % poids d'un bitume dont la pénétrabilité est de 92 1/10 mm et de point de ramollissement de 49°C. La dilution est réalisée dans un réacteur, à 170-180°C. Le bitume à 180-190°C est versé dans le réacteur. Ensuite, la solution concentrée en polymère est introduite dans le réacteur. L'agitation est maintenue jusqu'à obtention d'un mélange homogène.

Ensuite, 0,3 % en poids d'un promoteur d'adhésivité dans la masse de type polyamine grasse sont ensuite ajoutés.

Le bitume-polymère fluxé ainsi préparé présente une viscosité STV à 50°C, diamètre 10 mm de 250 secondes.

### Exemple 3 : Préparation d'une composition bitume-polymère fluxée par voie solution concentrée en polymère.

Cet exemple concerne également une composition de bitume-polymère fluxé, obtenue par voie solution concentrée en polymère. Le mode de préparation est identique à celui de l'exemple 2.

Le fluxant utilisé est composé de 1% de fluxant **B** et de 99% de fluxant **A2.** Les autres constituants sont les mêmes que dans l'exemple 2. Les teneurs de chaque produit sont identiques à celles de l'exemple précédent.

La solution concentrée en polymère ainsi préparée présente une viscosité STV à 50°C, diamètre 4 mm de 135 secondes. La viscosité du bitume-polymère fluxé obtenu présente une pseudo-viscosité STV à 50°C, diamètre 10 mm de 107 secondes.

### Exemple 4 : Préparation d'une composition bitume-polymère fluxée obtenue par fluxage d'un bitume-polymère.

Comme dans les exemples précédents, la composition est préparée dans un réacteur, à la température de 170-180°C sous agitation Cette fabrication comprend les composés suivants qui sont introduits dans cet ordre :
- 20 % d'un bitume-polymère réticulé de pénétrabilité 44 1/10 mm et de température de ramollissement de 66,4°C. Ce bitume-polymère contient 5% d'un copolymère styrène-butadiène de masse molaire moyenne comprise entre 90 000 de 150 000 g.mol⁻¹ et contenant 25% en poids de styrène.
- 68,7 % d'un bitume pur de pénétrabilité 76 1/10 mm et de température de ramollissement de 45°C.
- 11 % de fluxant constitué de 20 % de fluxant **B** et 80 % de fluxant **A1.**

Ce mélange est maintenu sous agitation à 170-180°C pendant environ 1 heure. Ensuite, 0,3 % en poids d'un promoteur d'adhésivité dans la masse de type polyamine grasse sont ajoutés.

Le mélange est homogénéisé sous agitation à 170-180°C pendant quelques minutes.

Le produit obtenu présente un aspect homogène et une viscosité dynamique à 50°C, 10s⁻¹ de 22 Pa.s

### Tests.

Les résultats des essais réalisés sur chacun des produits cités dans les exemples précédents sont présentés dans les tableaux 1 à 3 ci-après.

**TABLEAU 1**

| | | **Unité** | **Ex1** |
|---|---|---|---|
| Liant neuf | | | |
| Pseudo-viscosité STV à 40°C, diamètre 10 mm | NF T 66-005 | S | 167 |
| Adhésivité globale à 5°C | NF P 98-274-1 | - | 100 |
| Densité à 25°C | NF EN ISO 3838 | -- | 1,025 |

| Caractérisation de l'évaporation à 50°C | | | |
|---|---|---|---|
| % solvant évaporé / solvant initial | NF T 66-031 | | |
| 6h | | % poids | 21,1 |
| 1 jour | | % poids | 24,6 |
| 1,5 jours | | % poids | 35,2 |
| 4 jours | | % poids | 42,2 |
| 7 jours | | % poids | 59,8 |
| 14 jours | | % poids | 66,9 |

| Stabilisation 14 jours à 50°C | | | |
|---|---|---|---|
| % solvant évaporé / quantité de solvant initiale | NF T 66-031 | % poids | 66,9 |
| Pénétrabilité à 25°C | NF EN 1426 | 1/10 mm | 94 |
| Cohésivité au mouton pendule Vialit | NF T 66-037 | | |
| Valeur maximum | | J.cm⁻² | 0,8 |
| Température | | °C | 42,5 |

Le produit évalué est conforme aux spécifications des bitumes fluxés de la classe 800 - 1600 définie dans la norme XP T 65-003 et présente des propriétés d'adhésivité très satisfaisantes.

**TABLEAU 2**

| | | **Unité** | **Ex 2** | **Ex3** |
|---|---|---|---|---|
| Solution concentrée en polymère | | | | |
| Pseudo-viscosité STV à 50°C, diamètre 4mm | NF T 66-005 | s | 360 | 135 |
| Liant neuf | | | | |
| Pseudo-viscosité STV à 50°C, diamètre 10 mm | NF T 66-005 | s | 250 | 107 |
| Traction -10°C, 500 mm.min⁻¹ | T 66-038 | | | |
| Contrainte au seuil | | MPa | 0,64 | 0,79 |
| Contrainte à l'élongation maximale | | MPa | 0,22 | 0,25 |
| Elongation maximale | | % | 680 | 700 |
| Adhésivité globale à 5°C | NF P 98-274-1 | | 90 | 95 |
| Stabilisation 14 jours à 50°C | | | | |
| Pénétrabilité à 25°C | NF EN 1426 | 1/10 mm | | 89 |
| Point de ramollissement | NF EN 1427 | °C | | 50,5 |
| Point de fragilité Fraass | NF EN 12593 | °C | | -15 |
| Retour élastique | T 66-040 | % | | |
| Cohésivité au mouton pendule Vialit | NF T 66-037 | | | |
| Valeur maximum | | J.cm⁻² | | 1,1 |
| Température | | °C | | 45 |
| Traction 5°C, 500 mm.min⁻¹ | T 66-038 | | | |
| Contrainte au seuil | | MPa | | 1,71 |
| Contrainte à l'élongation maximale | | MPa | | 0,63 |
| Elongation maximale | | % | | 700 |

**TABLEAU 3**

| | | **Unité** | **Ex 4** |
|---|---|---|---|
| Liant neuf | | | |
| Viscosité à 50°C, | NF T 66-005 | Pa.s | 22 |
| Stabilité 3 jours à 160°C | NF EN 12847 | | Mélange très stable : Taux de polymère identique en haut et bas de l'éprouvette |
| Viscosité à 50°C, après stockage de 3jours à 60°C | NF T 66-005 | Pa.s | 22,9 |

## Revendications

1. Fluxant **caractérisé en ce qu'**il comprend :
➢ au moins une coupe pétrolière lourde **A** :
• dont la teneur en composés aromatiques TCA (en % en poids) est telle que :
TCA ≤ 5,0, et de préférence TCA ≤ 0,1
• dont la courbe de distillation CD (en °C) est telle que :
200 ≤ CD ≤ 400 et de préférence 250 ≤ CD ≤ 330 ;
➢ et au moins une coupe pétrolière aromatique légère **B** essentiellement constituée de composés aromatiques dont le nombre d'atomes de carbone est inférieur ou égal à 20, de préférence à 15, et plus préférentiellement encore à 10.

2. Fluxant selon la revendication 1, **caractérisé en ce que** le rapport massique **A/B** est tel que 50/50 ≤ **A/B** ≤ 99/1, et de préférence 70/30 ≤ **A/B** ≤ 90/10.

3. Fluxant selon la revendication 1 ou 2, **caractérisé en ce que** son point éclair PC_{F} (en °C) est tel que PC_{F} ≥ 55, et de préférence PC_{F} ≥ 62.

4. Fluxant selon l'une quelconque des revendications 1 à 3, **caractérisé en ce que** la coupe pétrolière **A** présente au moins l'une des caractéristiques suivantes :
**.a.** teneur en soufre [S] (en ppm) telle que : [S] ≤ 50,
**.b.** point éclair PC_{A} (en °C) tel que : PC_{A} ≥ 90;
**.c.** teneur en normal-paraffines [nP] (% en poids) telle que : [nP] ≤ 15,
**.d.** masse volumique MV (en kg/m³ à 15°C) telle que : 805 ≤ MV ≤ 830.

5. Fluxant selon l'une quelconque des revendications 1 à 4, **caractérisé en ce que** la coupe pétrolière **A** est une coupe gazole soumise à au moins un traitement d'hydrocraquage, de préférence précédé d'au moins une déazotation et/ou d'au moins une désulfuration, et, plus préférentiellement encore suivi d'au moins une distillation et/ou d'au moins un hydrotraitement.

6. Composition bitumineuse comprenant au moins un bitume et au moins un fluxant selon la revendication 1

7. Composition bitumineuse selon la revendication 6 **caractérisée en ce qu'**elle comprend un liant hydrocarboné anhydre et au moins un polymère réticulé ou non.

8. Composition bitumineuse selon la revendication 6 **caractérisée en ce qu'**elle est constituée par une émulsion comprenant :
**1**/ éventuellement au moins un polymère,
**2/** au moins un tensioactif,
**3**/ et de l'eau.

9. Procédé de préparation de la composition bitumineuse selon la revendication 7, **caractérisé en ce qu'**il consiste essentiellement à mélanger la solution mère et/ou au moins un polymère, avec le bitume à une température comprise entre 150 et 250°C sous pression normale, pendant plusieurs heures, puis éventuellement à mélanger ensuite du soufre à ce premier mélange.

10. Solution mère concentrée en polymère utile pour la préparation de compositions bitumineuses **caractérisée en ce qu'**elle comprend :
• au moins un fluxant selon l'une quelconque des revendications **1** à **5,**
• au moins un polymère réticulé ou non pour composition bitumineuse.

11. Solution mère concentrée selon la revendication **10, caractérisée en ce que** les proportions fluxant / polymère sont les suivantes : 0-90 / 100-10, de préférence 60-90 / 20-5.

12. Procédé de préparation de la solution mère concentrée selon l'une quelconque des revendications **10** et **11, caractérisé en ce qu'**il consiste essentiellement à mélanger le fluxant et le polymère à une température comprise entre 50 et 150°C sous pression normale, pendant plusieurs heures, puis éventuellement à mélanger ensuite du soufre à ce premier mélange.

13. Enrobé bitumineux **caractérisé en ce qu'**il comprend :
• une composition bitumineuse selon la revendication 7 ou **8,**
• et des granulats.

14. Application de la solution mère concentrée selon la revendication **10** ou **11,** de la composition bitumineuse selon la revendication 7 ou **8,** de la composition bitumineuse obtenue par le procédé selon la revendication **9,** ou de l'enrobé selon la revendication **13,** au revêtement routier.

15. Application de la solution mère concentrée selon la revendication **10** ou **11,** de la composition bitumineuse selon la revendication 7 ou **8,** de la composition bitumineuse obtenue par le procédé selon la revendication **9,** ou de l'enrobé selon la revendication **13** dans la fabrication de matériaux d'isolation phonique et/ou d'étanchéité et/ou d'amortissement de vibrations.

## Patentansprüche

1. Flussmittel, welches **dadurch gekennzeichnet ist, dass** es umfasst:
➢ wenigstens eine Schwerölfraktion **A:**
• deren Gehalt an aromatischen Verbindungen GAV (in Gewichtsprozent) derart ist, dass:
GAV ≤ 5,0 und vorzugsweise GAV ≤ 0,1
• deren Destillationskurve DK (in °C) derart ist, dass:
200 ≤ DK ≤ 400 und vorzugsweise 250 ≤ DK ≤ 330;
➢ und wenigstens eine aromatische Leichtölfraktion **B,** welche im Wesentlichen aromatische Zusammensetzungen umfasst, bei welchen die Anzahl der Kohlenstoffatome kleiner gleich 20 ist, bevorzugt 15 und noch stärker bevorzugt 10.

2. Flussmittel nach Anspruch 1, **dadurch gekennzeichnet, dass** das Massenverhältnis **A/B** derart ist, dass 50/50 ≤ **A/B** ≤ 99/1 und bevorzugt 70/30 ≤ **A/B ≤** 90/10.

3. Flussmittel nach Anspruch 1 oder 2, **dadurch gekennzeichnet, dass** sein Flammpunkt PC_{F} (in °C) derart ist, dass PC_{F} ≥ 55, und bevorzugt PC_{F} ≥ 62.

4. Flussmittel nach einem der Ansprüche 1 bis 3, **dadurch gekennzeichnet, dass** die Erdölfraktion **A** wenigstens eines der folgenden Merkmale aufweist:
.a. Schwefelgehalt [S] (in ppm) derart, dass: [S] ≤ 50,
.b. Flammpunkt PC_{A} (in °C) derart, dass: PC_{A} ≥ 90;
.c. Normal-Paraffin-Gehalt [nP] (in Gewichtsprozent) derart, dass: [nP] ≤ 15,
.d. Volumengewicht VG (in kg/m³ bei 15 °C) derart, dass: 805 ≤ VG ≤ 830.

5. Flussmittel nach einem der Ansprüche 1 bis 4, **dadurch gekennzeichnet, dass** die Erdölfraktion **A** eine Gasölfraktion ist, die wenigstens einer Hydrocrack-Behandlung unterzogen wurde, bevorzugt mit wenigstens einem vorangehenden Stickstoffentzug und/oder wenigstens einer Entschwefelung, und noch stärker bevorzugt gefolgt von wenigstens einer Destillation und/oder wenigstens einer Hydrobehandlung.

6. Bitumenzusammensetzung, welche wenigstens ein Bitumen und wenigstens ein Flussmittel nach Anspruch 1 umfasst.

7. Bitumenzusammensetzung nach Anspruch 6, **dadurch gekennzeichnet, dass** sie ein wasserfreies kohlenwasserstoffhaltiges Bindemittel und wenigstens ein vernetztes oder nicht vernetztes Polymer umfasst.

8. Bitumenzusammensetzung nach Anspruch 6, **dadurch gekennzeichnet, dass** sie eine Emulsion enthält, welche umfasst:
**1**/ ggf. wenigstens ein Polymer,
**2**/ wenigstens ein Tensid,
**3**/ und Wasser.

9. Verfahren zur Zubereitung der Bitumenzusammensetzung nach Anspruch 7, **dadurch gekennzeichnet, dass** es im Wesentlichen darin besteht, die Stammlösung und/oder wenigstens ein Polymer mit dem Bitumen bei einer Temperatur zwischen 150 und 250 °C unter Normaldruck über mehrere Stunden zu mischen, und dann ggf. Schwefel unter diese erste Mischung zu mischen.

10. Stammlösung, die konzentriert an Polymer ist, für die Zubereitung von Bitumenzusammensetzungen, **dadurch gekennzeichnet, dass** sie umfasst:
• wenigstens ein Flussmittel nach einem der Ansprüche **1** bis **5,**
• wenigstens ein vernetztes oder nicht vernetztes Polymer für Bitumenzusammensetzungen.

11. Konzentrierte Stammlösung nach Anspruch **10, dadurch gekennzeichnet, dass** die Verhältnisse Flussmittel/Polymer wie folgt sind: 0-90 / 100-10, bevorzugt 60-90 / 20-5.

12. Verfahren zur Zubereitung der konzentrierten Stammlösung nach einem der Ansprüche **10** und **11, dadurch gekennzeichnet, dass** es im Wesentlichen darin besteht, das Flussmittel und das Polymer bei einer Temperatur zwischen 50 und 150 °C unter Normaldruck über mehrere Stunden zu mischen, und dann ggf. Schwefel unter diese erste Mischung zu mischen.

13. Bituminöses Mischgut, **dadurch gekennzeichnet, dass** es umfasst:
• eine Bitumenzusammensetzung nach Anspruch **7** oder **8,**
• und Granulate.

14. Anwendung der konzentrierten Stammlösung nach Anspruch **10** oder **11,** der Bitumenzusammensetzung nach Anspruch **7** oder **8,** der durch das Verfahren nach Anspruch **9** gewonnenen Bitumenzusammensetzung oder des Mischgutes nach Anspruch **13** in der Straßenbeschichtung.

15. Anwendung der konzentrierten Stammlösung nach Anspruch **10** oder **11,** der Bitumenzusammensetzung nach Anspruch **7** oder **8,** der durch das Verfahren nach Anspruch 9 gewonnenen Bitumenzusammensetzung oder des Mischgutes nach Anspruch **13** in der Herstellung von Materialien für die Geräuschisolierung und/oder Abdichtung und/oder Vibrationsdämpfung.

## Claims

1. Flux **characterised in that** it comprises:
- at least one heavy petroleum fraction A:
-- of which the aromatic compound concentration ACC (in percent by weight) is such that:
ACC ≤ 5.0 and preferably ACC ≤ 0.1
-- of which the distillation curve DC (in °C) is such that:
200 ≤ DC ≤ 400 and preferably 250 ≤ DC ≤ 330;
- and at least one light aromatic petroleum fraction B consisting essentially of aromatic compounds of which the number of carbon atoms is less than or equal to 20, preferably to 15, and more preferentially to 10.

2. Flux according to claim 1, **characterised in that** the weight ratio A/B is such that 50/50 ≤ A/B ≤ 99/1, and preferably 70/30 ≤ A/B ≤ 90/10.

3. Flux according to claim 1 or 2, **characterised in that** its flash point PC_{F} (in °C) is such that PC_{F} ≥ 55, and preferably PC_{F} ≥ 62.

4. Flux according to any of claims 1 to 3, **characterised in that** the petroleum fraction A has at least one of the following characteristics:
.a. sulphur content [S] (in ppm) such that: [S] ≤ 50,
.b. flash point PC_{A} (in °C) such that: PC_{A} ≥ 90;
.c. normal paraffin content [nP] (percentage by weight) such that: [nP] ≤ 15,
.d. volumetric mass density VMD (in kg/m³ at 15°C) such that: 805 ≤ VMD ≤ 830.

5. Flux according to any of claims 1 to 4, **characterised in that** the petroleum fraction A is a diesel fraction subjected to at least one hydrocracking treatment, preferably preceded with at least one denitrogenation and/or at least one desulphurisation, and, more preferentially followed by at least one distillation and/or at least one hydrotreatment.

6. Bituminous composition comprising at least one bitumen and at least one flux according to claim 1.

7. Bituminous composition according to claim 6 **characterised in that** it comprises an anhydrous hydrocarbon binder and at least one polymer crosslinked or not.

8. Bituminous composition according to claim 6 **characterised in that** it consists of an emulsion comprising:
1/ possibly at least one polymer,
2/ at least one surfactant,
3/ and water.

9. Method for preparing the bituminous composition according to claim 7, **characterised in that** it substantially consists in mixing the stock solution and/or at least one polymer, with the bitumen at a temperature between 150 and 250°C under normal pressure, for several hours, then possibly mixing afterwards sulphur with this first mixture.

10. Stock solution concentrated in polymer useful for the preparation of bituminous compositions **characterised in that** it comprises:
- at least one flux according to any of claims 1 to 5,
- at least one polymer crosslinked or not for bituminous composition.

11. Concentrated stock solution according to claim 10, **characterised in that** the flux / polymer proportions are as follows: 0-90 / 100-10, preferably 60-90 / 20-5.

12. Method for preparing the concentrated stock solution according to any of claims 10 and 11, **characterised in that** it substantially consists in mixing the flux and the polymer at a temperature between 50 and 150°C under normal pressure, for several hours, then possibly mixing sulphur afterwards with this first mixture.

13. Asphalt **characterised in that** it comprises:
- a bituminous composition according to claim 7 or 8,
- and aggregates.

14. Application of the concentrated stock solution according to claim 10 or 11, of the bituminous composition according to claim 7 or 8, of the bituminous composition obtained by the method according to claim 9, or of the asphalt according to claim 13, to road surfaces.

15. Application of the concentrated stock solution according to claim 10 or 11, of the bituminous composition according to claim 7 or 8, of the bituminous composition obtained by the method according to claim 9, or of the asphalt according to claim 13 in the manufacture of sound insulation and/or sealing and/or vibration dampening materials.
